# EUROPEAN PATENT SPECIFICATION

(11) **EP 2 266 028 B1**
(45) Date of publication and mention of the grant of the patent: **20.11.2013**
(21) Application number: 09730478.6
(22) Date of filing: 07.04.2009
(51) Int. Cl.: G06F 9/44

(54) **METHOD AND DEVICE FOR THE IMPLEMENTATION OF A COMMUNICATION PROTOCOL IN A CONTROL UNIT, ESPECIALLY FOR VEHICULAR APPLICATIONS**
VERFAHREN UND VORRICHTUNG ZUR IMPLEMENTIERUNG EINES KOMMUNIKATIONSPROTOKOLLS IN EINE STEUERUNGSEINHEIT, INSBESONDERE FÜR FAHRZEUGANWENDUNGEN
PROCÉDÉ ET DISPOSITIF POUR LA MISE EN OEUVRE D'UN PROTOCOLE DE COMMUNICATION DANS UNE UNITÉ DE COMMANDE, NOTAMMENT POUR DES APPLICATIONS VÉHICULAIRES

(30) Priority: 08.04.2008 EP 08425235
(43) Date of publication of application: 29.12.2010
(60) Divisional application: 13168410.2
(73) Proprietor: Iveco S.p.A., 10156 Torino (IT)
(72) Inventor: CORTESE, Demetrio, I-10093 Collegno (IT)
(74) Representative: Borsano, Corrado
(86) International application number: PCT/IB2009/051456
(87) International publication number: WO 2009/125340

(56) References cited:
- EP-A1- 1 551 142
- WO-A-99/04533
- US-A1- 2002 099 827
- US-A1- 2004 062 271
- US-B1- 6 931 574

## Description

### Field of the invention

The present invention relates to a method and device for the implementation of a communication protocol in a control unit, especially for vehicular applications.

### Description of the prior art

The realization of control units in the vehicular field, and in general where high performances and high reliability are needed, is a critical point in the production process, because of the need of an efficient realization timing.

When more control units have to be integrated in a communication network suitable for managing different and concurrent processes, there is a very high probability that some errors occur during the realization of the control units. Consequently the test periods are particularly long and the costs are high.

The management of the communication in the control units, may generally be defined as constituted by two fundamental processes: the first one is managed by the interface device called "CAN Driver", when the communication protocol is of the CAN type known in the art, and relates to the low-level interfacing with the vehicular communication network in terms of transmission and reception of the messages; the second one, defined as interpreter/manipulator of the messages, has to interpret the received messages, extracting the information to be made available to the application Software, and has to compile the messages to be transmitted, starting from the information made available by the application software.

At present, the development of the so-called interpreter/manipulator needs the intervention of two professionals, namely the system engineer, who defines the specifications and the functionalities of the messages that the control unit has to manage, and the software engineer, who translates in the appropriate software language the specifications formulated by the system engineer.

In particular, the system engineer writes the specifications according to the message standardization defined by the manufacturer for whom he/she works, for example according to the protocol J1939 of the type known, while the software engineer has to implement said specification considering the hardware characteristics of the specific control unit to be programmed. For this reason, when the control unit changes, it is necessary to implement again the application level functions which carry out the calls to the low-level function, in order to obtain the correct packing and unpacking of the messages.

Moreover, each manufacturer, though respecting the communication standards, needs to develop the proprietary CAN messages and a specific management for the identification of the failures and their following recovery.

For example, in a CAN message, the information is serialized into a bit word and each message may have a variable length, depending also on how the manufacturer wants to personalize the message, and may comprise one or more information.

In the last years, the use of the commercial model-based application software has considerably simplified the writing of programming codes, but the time needed for the development and the high error probability are still a serious problem. In particular, the MatLab® package with the application software Simulink® by MathWorks® is a visual development environment which, by means of the graphical interconnection of blocks, allows to define the functional flowchart and the transfer function of any system, being known in the art that the transfer function may be studied as a filter, and then the package converts everything into programming code.

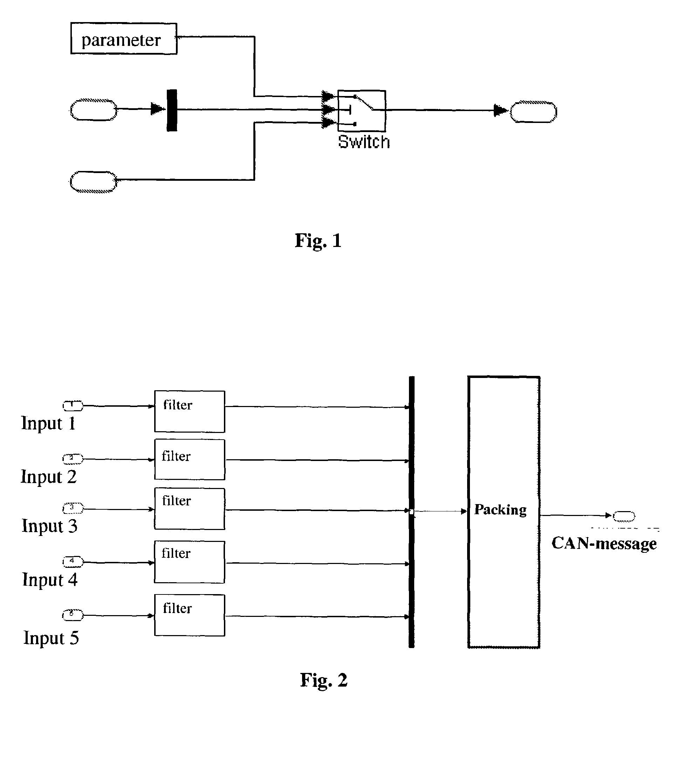

Figure 1 from the prior art shows an example of block diagram created in the Simulink® environment. Generally on the left there are the inputs, and on the right there are the output(s), according to the path indicated by the connection arrows between the blocks.

The oval graphical elements on the left generally indicate the inputs, while the rectangle high on the left indicates a modifiable work parameter of the filter, while the oval on the right indicates the output of the filter.

This output may be a work parameter or a variable relating to a physical magnitude.

In spite of this considerable simplification, the interaction with this development environment for the programming of control units is not suitable for professionals who are not particularly expert. For this reason it is intended to be used essentially by the software engineer without solving the problems relating to the writing of the functional specifications according to the corporate standards and their following implementation according to the specific control unit to be programmed.

Therefore, the technical problems connected to the complexity of the implementation operations of a communication protocol in a control unit, and secondly to the writing of the technical documentation which can lead to wrong interpretations which causes a loss of time and of money, are still unsolved. US6931574 shows a network protocol analyzers for capturing, analyzing, and graphically displaying information about data frames that are transmitted over a network. EP 1551142 shows the translation of messages from a first to a second protocol.

### Summary of the invention

The purpose of the present invention is to provide a method and device for the implementation of a communication protocol in a control unit, especially for vehicular application, able to solve the problems described above, especially in terms of the minimization of the development time and of the error probability during the programming operations of the control unit, besides the facilitation of the interfacing operations between the engineer and the processing system.

A subject of the present invention is a method for programming a high level procedure of a control unit of a vehicle, according to claim 1.

Another subject of the present invention is a device for programming a high level procedure of a control unit of a vehicle, suitable for carrying out the method described above, according to claim 10.
Said device comprises at least a graphical interface allowing the selection of at least one input message, the filtering of this message according to at least one functional specification, the automatic generation of a block model equivalent to the message to be sent and the automatic conversion of the model into programming language.
The dependent claims describe the preferred embodiments of the invention, and are an integral part of this description.

### Brief description of the Fiaures

Further characteristics and advantages of the invention will be more apparent in light of a detailed description of a preferred, but non-exclusive, embodiment of a method and device for the implementation of a communication protocol in a control unit, shown with the help of the drawings that are attached hereto, which are merely illustrative and not limitative, in which:
Fig. 1 from the prior art shows an example of block diagram of the model-based type generated in Simulink® environment;
Fig. 2 shows a model generated according to the method that is subject of the present invention;
Fig. 3 shows an example of a main graphical menu of a device suitable for the implementation of the method according to the present invention;
Fig. 4 shows an example of a first dialogue window that allows to select some operating parameters of a filter;
Fig. 5 shows an example of a second graphical interface which allows to create or modify a message, the configure the filters that may be applied to the signals correspondent to the data contained in the imported message.

In the drawings the same reference numbers and letters are used to identify the same elements or components.

### Detailed description of a preferred embodiment of the invention

According to the present invention, there is a first preliminary step wherein the following data are loaded in a database:
- a set of filters in model-based format suitable to manipulate physical variables and operating parameters of a device such as an engine, or a sensor, an actuator or an air conditioner control unit, etc., according to the manufacturer or implementer specifications,
- a set of predefined CAN messages according to the manufacturer or implementer specifications, each CAN message comprising one or more bit words representing a physical magnitude or a work parameter of said device, engine, etc..

In a second preliminary step said database is loaded with a first set of labels, in one-to-one relationship with each CAN message, and with a second set of labels, in one-to-one relationship with each variable or parameter contained in said CAN messages, and with a third set of labels, in one-to-one relationship with each filter in model-based format.

After doing this, it is possible to:
- select a CAN message, suitable to be received and recognized by the control unit, in a list of CAN messages according to its label,
- view, by means of the relative labels, the variable(s) and/or the operating parameter(s) contained in said message,
- recall from a list of filters one or more filter, e.g. in model-based format, according to the relative labels,
- assign to said filter one or more inputs and one or more operating parameters among those contained in said message.

For each message it is possible to select the filters which work in parallel on the same variable or on different variables contained in said message.

Then an output message is generated, formalized according to the CAN specifications of the manufacturer or of the implementer, comprising the bit to bit serialization, namely the succession of all the outputs of all the selected filters configured according to the variables or to the operating parameters contained in the message.

Moreover, an operating parameter of a selected filter, or a variable in a message to be sent, may be manually added by the operator.

For example, if there are three filters with three outputs and the message to be sent has four variables, the value of one of these four variables contained in the message may be added by hand.

Figure 2, which is merely illustrative and not-limitative, shows the functioning in a clearer way.

Figure 2 shows five branches, each of them is occupied by a filter block (filter), inside each of them there is an input defined by a physical variable contained in a CAN message. The five branches converge in a serialization block, also called MUX or PACKING, where the outputs of each filter are queued the one after the other, then they are serialized and included in an output CAN message.

Each of said filters is at least partially empty, programmers call it "template", namely it is a filter whose blocks and the interconnection among them are defined, but wherein at least one input and/or one operating parameter is not defined. Advantageously, the present method makes easier and faster the programming of a control unit working in a communication network, for example based on the CAN protocol, as it is easy to create a relationship between said empty filters and the messages and therefore to properly implement the filters.

For this reason, case by case, a filter in model-based format, completely defined in terms of inputs and/or operating parameters, is automatically generated starting from the selection of its corresponding template and of the working parameters and/or input variables and/or operating variables.

Finally, the CAN message is automatically generated according to the specifications imposed by the manufacturer or the implementer, for example by means of appropriate libraries, similarly to what happens in an Ethernet board.

To sum up, the method according to present invention may be applied in a system comprising at least one processing unit, and comprises the following steps:
- a first selection of a first message from a list of messages, suitable for being received and processed by the control unit, this message containing at least one parameter and/or one value of a physical magnitude,
- a visualization of the variable(s) and/or operating parameter(s) contained in said first message,
- a second selection of one or more filters in model-based format from a list of filters, said filter comprising at least one input and/or one operating parameter,
- an assignment to said input and/or operating parameter of said parameter or physical magnitude value contained in said message,
- a generation of a second message, suitable for being sent by the control unit, comprising at least an output of said filter, as a result of the operation carried out by said filter, being said lists memorized in a database.

These steps may be easily carried out, since each selection and manipulation is guided by the descriptive labels relative to each message and to each filter and/or variable/parameter contained in said message.

Moreover, the assignment of the input/operating parameters of each filter may be easily carried out by means of the drop down menus that are automatically generated according to the number of variables available in the workspace.

In the workspace are therefore present all the variables relating to one or more selected messages, and also the variables defined by the operator, if any, and the variables and parameters generated by the operating system of the control unit itself.

Therefore the selection of a message from a pre-existing database allows to translate the parameters contained in it into a high-level language, so that they can be understood by an operator.

The import procedure, therefore, is suitable for converting a bit word contained in a message, e.g. a CAN message, according to its position in the message and to the type of message, into an operating parameter or into a variable relating to a physical magnitude, in order to manage and control, for example, the status of a particular actuator or sensor, or to at least a specific analogue value relating to a physical magnitude, such as temperature or pressure.

In particular the message, composed by a set of bit words, is represented, for example on a screen, as a set of one or more variables represented by their relative labels having an explicative meaning, which make the nature of the message and its usage context more easily understandable.

For example, in case of the programming of a control unit for the management of an endothermic engine, the bit word contained in a CAN message which refers to the engine temperature is automatically shown on the screen with an editable or non-editable field and with a label descriptive of its meaning.

Therefore, if there is a first database containing the list of the messages and their relative specifications used by a manufacturer for the data exchange in the systems, then it is possible to select the message, for example, from a first drop down menu. After that, the editable or non-editable fields are shown with their relative descriptive labels referring to all the bit words contained in the message. Said preliminary step for loading the CAN messages in said database may be carried out by means of a message analyzer, for example a so called CAN-analyzer, which uses the CAN protocol, in order to populate said database.

A new message, however, may be created at any time by the operator by means of an appropriate graphical interface.

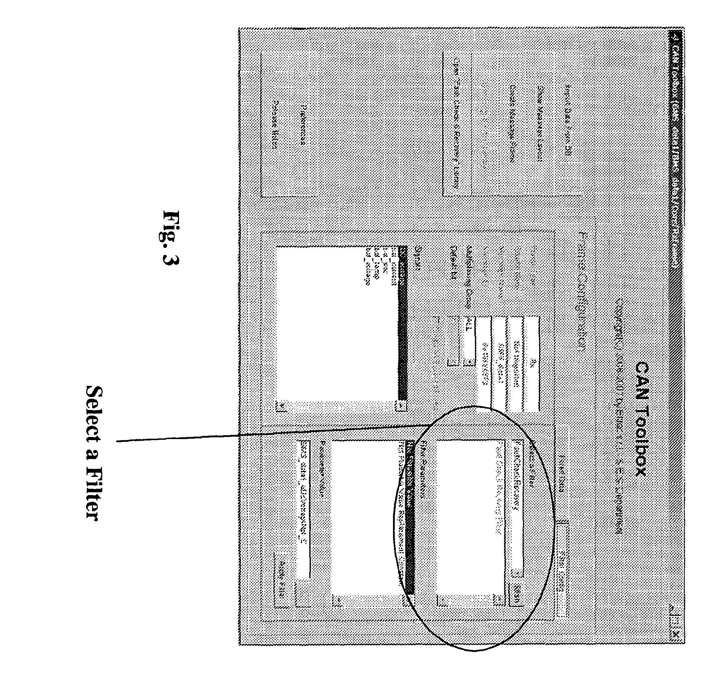

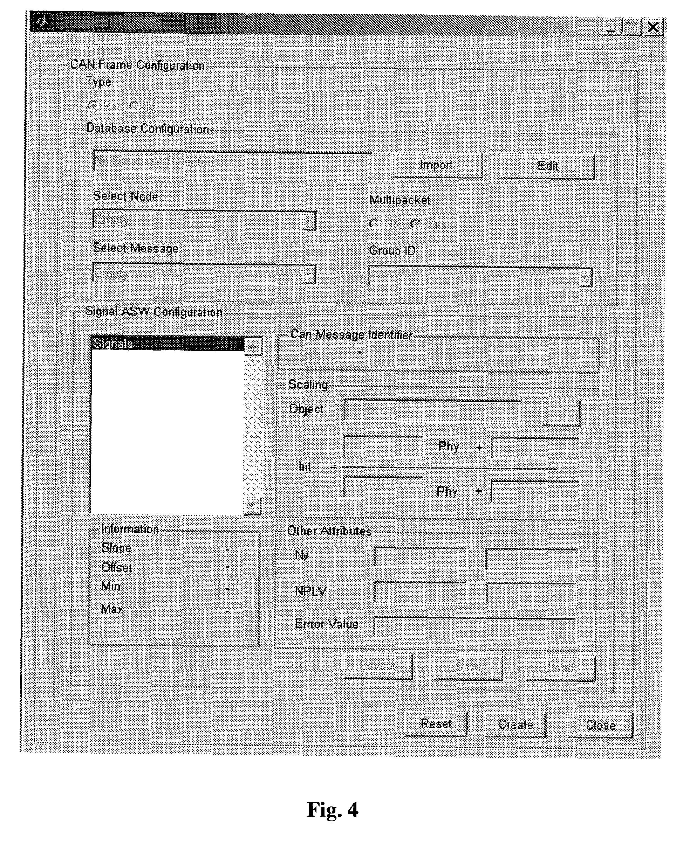

Figure 3 shows a work interface, wherein high on the left there is a button "Create message frame" which opens a second interface shown in figure 4, which allows to create a new message.

Therefore, in order to program a control unit, always in a graphical way, so that it behaves in a certain way when a certain message arrives, it is possible to select, for example by means of a second drop down menu at least one filter, in order to manipulate and filter the information contained in the message received and/or to add the result of an application level thread implemented by the control unit.

The characteristics of each filter are specified by means of a relative block diagram of the model-based type, for example in the Simulink® environment. The block diagrams are contained in a pre-existing second Database and are associated to a label. For this reason, the automatic generation of the model-based model comprises the setting of the operating parameters of the model relative to the filter selected by means of a dialogue window, comprising the labels explaining each parameter.

Therefore the automatic generation step of the model of the model-based type comprises the exploitation of the operating parameters of a pre-uploaded model in the second database.

The automatic generation, therefore, comprises the application of pre-determined parameters to a model of the model-based type, so that a predetermined model associated to a filter operates according to the variables and the parameters previously set.

The coupling between a received message and at least one filter may be automated by associating in said database a message to at least one filter and to a filter at least one message and/or leaving the operator freedom of choice.

As regards the example of a device for the application of the method, with reference to figure 3, a first graphical interface comprises a command button called "Import Data from DB" which allows the activation of the first procedure of data import. Said command activates a dialogue window, as shown in figure 4, containing some select buttons which may be used to select the messages to be imported, both received and transmitted messages.

Once the selection is completed, the first graphical interface will be shown again, allowing to carry out the following operations:
- the manual entering of data in a field of the message selected by means of a keyboard or in general by means of human-machine interfaces;
- the selection of a filter applicable to the message, by means of a command button called "Open Signal Filter Library" which opens a second dialog window, shown in the oval in figure 3, called "Select a Filter".

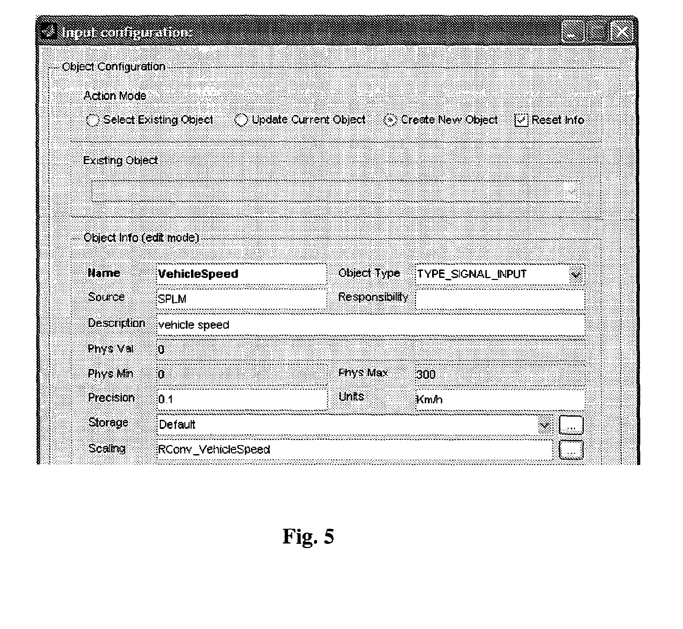

The first graphical interface comprises a further command button called "Filter Config" which activates a second graphical interface shown in figure 5, which allow to configure, one at a time, the filters applicable on the signals correspondent to the data contained in the imported message.

Finally, the second dialog window comprises a further command button called "Apply Filter" which allows to automatically generate a Model-Based model in the Simulink® environment, equivalent to the message to be sent, similar to that shown in figure 2.

Then it is possible to convert into C language, or other equivalent programming language, the generated model.

Advantageously, it is possible to add to the database not only the labels but also detailed descriptions of the empty filters (templates), e.g. names and quantities relating to the operating parameters or to the inputs, therefore said descriptions serve as drafts or pre-set templates. This way when the operator assigns a parameter or an input to a filter using the present device, it automatically modifies the draft of the filter description, replacing a generic name, e.g. VAR1, already present in the draft, with the label relating to the variable assigned to the filter, e.g. TEMPERATURE, any time the operator refers to an input or to an operating parameter of the empty filter.

Therefore it is possible to automatically generate a technical document having a structure coherent to the operations the operator carries out, since said empty fields are enhanced, time by time, with the specific information added in the first three steps of the method.

For this reason, when an operator creates a new filter, the system obliges him/her to write a detailed description of the filter, assigning generic names to the inputs, e.g. VAR1, VAR2, etc.. When a variable or input parameter or operating parameter is assigned to a filter, it replaces all instances of VAR1, for example with TEMPERATURE.

This way it is possible to generate a technical document formatted according to a standard scheme and referring to messages and filters contained in the respective database and, in some cases, accompanied by their respective documentation. Said document is perfectly understandable by a system engineer or by a software engineer.

Advantageously, since the programming process may be carried out with the Simulink® application software, supported by the Matlab® environment, it is possible, thanks to the Matlab®'s functions, to obtain files, for example in C language, from the flowcharts mentioned above. This eliminates any possibility of human programming error, and considerably reduces the activity of the software engineer, keeping the quality of the programming code very high.

Moreover, since a so high-level programming is carried out by means of a model-based graphical environment, it is possible to compile the result of the programming in C language, or in machine language or in another language, by means of the specific libraries, also called API, provided by the control unit manufacturer. This way, when the type of control unit is changed, the operations for adapting the program are extremely reduced.

The present method and relative device may advantageously be applied to any development environment similar to Matlab® and Simulink®, moreover the implemented communication program may be any.

In particular, the present invention may be applied in the aerospace field, where the communication protocol between the processing units is that identified by the number 1553.

Therefore the present invention may advantageously be embodied by means of a computer program, which comprises program code means performing one or more steps of said method, when said program is run on a computer. For this reason the scope of the present patent is meant to cover also said computer program and the computer-readable means that comprises a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details.

## Claims

1. Method for programming a high level procedure of a control unit of a vehicle, the vehicle comprising a CAN network and a device, the control unit receiving and processing first CAN messages and generating and sending second CAN messages,
the method comprising the following steps:
- association of a first CAN message contained in a list of CAN messages to a first label, said first CAN message containing one parameter and/or one value of a physical magnitude of said device,
- association of a filter in model-based format contained in a list of filters to a second label,
- association of each value relating to a physical magnitude or operating parameter of said device to a third label,
- visualization of said first, second and third labels,
- first selection of a first CAN message from said list of CAN messages for being received and processed by the control unit,
- second selection of one or more filters in model-based format from said list of filters, said one or more filters comprising one input and/or one second operating parameter,
- assignment of said first parameter or physical magnitude value contained in said first CAN message to said input and/or second operating parameter of the filter,
- generation of a second CAN message for being sent by the control unit, comprising at least an output of said filter as a result of the operation carried out by said filter,
- bit to bit serialization as succession of all the outputs of all the one or more selected filters,
being said lists and said labels stored in a database.

2. Method according to claim 1, further comprising the step of generating a programming language equivalent to said model-based format filter and compiling said programming language equivalent to be executed on said control unit by means of libraries provided by the control unit manufacturer.

3. Method according to the previous claims, further comprising a preliminary step of entering said filters and said CAN messages in said database.

4. Method according to the previous claims, further comprising a preliminary step of entering said first CAN messages and said filters in said database.

5. Method according to claim 4, wherein said entering of said first CAN messages is carried out by means of a CAN-analyzer.

6. Method according to the previous claims, wherein a 1-to-1 or a 1-to-many relationship between a first CAN message and one or more filters is stored, so that said second selection may be carried out in a subset of said list of filters.

7. Method according to the previous claims, wherein at least one information in said second CAN message is manually added.

8. Method according to the previous claims, further comprising a step of entering in said database a technical description for each filter, comprising at least a generic name of an input.

9. Method according to claim 8, wherein said generic name of an input is replaced by the label of a variable or of a parameter contained in said first CAN message, when said variable is assigned to the filter input, to which said generic name refers.

10. Device for programming a high level procedure of a control unit of a vehicle comprising a device, the control unit receiving and processing first CAN messages and generating and sending second CAN messages, comprising means for carrying out the method according to any of the previous claims.

11. Device according to claim 10, wherein said means comprise at least a database, a graphical interface provided with data input means, command means, selection means, allowing the selection of at least one input CAN message, the filtering of said CAN message according to at least one functional specification, the automatic generation of a block model equivalent to the second CAN message to be sent and the automatic conversion of the model into programming language.

12. Computer program comprising program code means suitable for performing the steps of any claim from 1 to 9, when such program is run on a computer.

13. Computer-readable means comprising a recorded program, said computer-readable means comprising program code means suitable for performing the steps according to the claims from 1 to 9, when said program is run on a computer.

## Patentansprüche

1. Verfahren zum Programmieren einer High Level Prozedur einer Steuerungseinheit eines Fahrzeugs, wobei das Fahrzeug ein CAN Netzwerk und eine Vorrichtung aufweist, wobei die Steuerungseinheit erste CAN Nachrichten erfasst und verarbeitet und zweite CAN Nachrichten generiert und sendet, wobei das Verfahren die folgenden Schritte aufweist:
- Verbinden einer ersten CAN Nachricht, die in einer Liste von CAN Nachrichten enthalten ist, mit einem ersten Label, wobei die erste CAN Nachricht einen Parameter und/oder einen Wert einer physikalischen Größe der Vorrichtung enthält,
- Verbinden eines Filters in einem modellbasierten Format, der in einer Liste von Filtern enthalten ist, mit einem zweiten Label,
- Verbinden von jedem Wert, der sich auf eine physikalische Größe oder einen Betriebsparameter der Vorrichtung bezieht, mit einem dritten Label,
- Visualisieren des ersten, zweiten und dritten Labels,
- erstes Auswählen einer ersten CAN Nachricht von der Liste von CAN Nachrichten, um von der Steuerungseinheit erfasst und verarbeitet zu werden,
- zweites Auswählen von einem oder mehreren Filtern in modellbasiertem Format von der Liste von Filtern, wobei der eine oder die mehreren Filter eine Eingabe und/oder einen zweiten Betriebsparameter aufweisen,
- Zuordnen des ersten Parameters oder Werts der physikalischen Größe, der in der ersten CAN Nachricht enthalten ist, zu der Eingabe und/oder dem zweiten Betriebsparameter des Filters,
- Generieren einer zweiten CAN Nachricht, um von der Steuerungseinheit gesendet zu werden, aufweisend mindestens eine Ausgabe des Filters als Resultat des Betriebs, der durch den Filter ausgeführt wurde,
- Bit für Bit in serielle Reihenfolge bringen als Abfolge von allen Ausgaben von allen, dem einen oder den mehreren, ausgewählten Filtern,
wobei die Listen und die Labels in einer Datenbank gespeichert sind.

2. Verfahren nach Anspruch 1, weiter aufweisend den Schritt zum Generieren einer Programmiersprache entsprechend zu dem modellbasierten Formatfilter und zum Kompilieren der Programmiersprache entsprechend, um auf der Steuerungseinheit durch Bibliotheken ausgeführt zu werden, die durch den Hersteller der Steuerungseinheit zur Verfügung gestellt werden.

3. Verfahren nach den vorhergehenden Ansprüchen, weiter aufweisend einen einleitenden Schritt zum Eingeben der Filter und der CAN Nachrichten in die Datenbank.

4. Verfahren nach den vorhergehenden Ansprüchen, weiter aufweisend einen einleitenden Schritt zum Eingeben der ersten CAN Nachrichten und der Filter in die Datenbank.

5. Verfahren nach Anspruch 4, wobei das Eingeben der ersten CAN Nachrichten durch einen CAN-Analysator ausgeführt wird.

6. Verfahren nach den vorhergehenden Ansprüchen, wobei eine eins zu eins oder eine eins zu viele Beziehung zwischen einer ersten CAN Nachricht und einem oder mehreren Filtern gespeichert ist, so dass die zweite Auswahl in einer Teilmenge der Liste von Filtern ausgeführt werden kann.

7. Verfahren nach den vorhergehenden Ansprüchen, wobei mindestens eine Information in der zweiten CAN Nachricht manuell addiert wird.

8. Verfahren nach den vorhergehenden Ansprüchen, weiter aufweisend einen Schritt zum Eingeben einer technischen Beschreibung für jeden Filter in die Datenbank, der mindestens einen generischen Namen von einer Eingabe aufweist.

9. Verfahren nach Anspruch 8, wobei der generische Name von einer Eingabe durch das Label von einer Variablen oder von einem Parameter, enthalten in der ersten CAN Nachricht, ersetzt wird, wenn die Variable zu der Filtereingabe zugeordnet wird, zu welcher sich der generische Name bezieht.

10. Vorrichtung zum Programmieren einer High Level Prozedur einer Steuerungseinheit eines Fahrzeugs, das eine Vorrichtung aufweist, wobei die Steuerungseinheit erste CAN Nachrichten erfasst und verarbeitet und zweite CAN Nachrichten generiert und sendet, aufweisend Mittel zum Ausführen des Verfahrens nach einem der vorhergehenden Ansprüche.

11. Vorrichtung nach Anspruch 10, wobei die Mittel aufweisen mindestens eine Datenbank, eine graphische Schnittstelle, die mit Dateneingabemitteln vorgesehen ist, Befehlsmittel, Auswahlmittel, die die Auswahl von mindestens einer Eingabe-CAN-Nachricht, die Filterung der CAN Nachricht nach mindestens einer funktionalen Spezifikation, die automatische Generierung von einem Blockmodell entsprechend zu der zweiten CAN Nachricht, die zu senden ist, und die automatische Konversion des Modells in Programmiersprache erlauben.

12. Computerprogramm, das Programmcodemittel aufweist, die geeignet sind, um die Schritte von irgendeinem Anspruch von 1 bis 9 auszuführen, wenn ein solches Programm auf einem Computer läuft.

13. Computerlesbares Mittel aufweisend ein gespeichertes Programm, wobei das computerlesbare Mittel Programmcodemittel aufweist, die geeignet sind, um die Schritte nach den Ansprüchen von 1 bis 9 auszuführen, wenn das Programm auf einem Computer läuft.

## Revendications

1. Procédé de programmation d'une procédure de haut niveau d'une unité de commande d'un véhicule, le véhicule comprenant un réseau CAN et un dispositif, l'unité de commande recevant et traitant des premiers messages de réseau CAN et générant et envoyant des seconds messages de réseau CAN, le procédé comprenant les étapes ci-dessous :
- l'association d'un premier message de réseau CAN contenu dans une liste de messages de réseau CAN à une première étiquette, ledit premier message de réseau CAN contenant un paramètre et/ou une valeur d'une grandeur physique dudit dispositif ;
- l'association d'un filtre dans un format à base de modèles inclus dans une liste de filtres à une deuxième étiquette ;
- l'association de chaque valeur relative à une grandeur physique ou à un paramètre d'exploitation dudit dispositif à une troisième étiquette ;
- la visualisation desdites première, deuxième et troisième étiquettes ;
- une première sélection d'un premier message de réseau CAN à partir de ladite liste de messages de réseau CAN, devant être reçu et traité par l'unité de commande ;
- une seconde sélection d'un ou plusieurs filtres dans un format à base de modèles à partir de ladite liste de filtres, ledit un ou lesdits plusieurs filtres comprenant une entrée et/ou un second paramètre d'exploitation ;
- l'affectation dudit premier paramètre ou de ladite première valeur de grandeur physique incluse dans ledit premier message de réseau CAN à ladite entrée et/ou audit second paramètre d'exploitation du filtre ;
- la génération d'un second message de réseau CAN destiné à être envoyé par l'unité de commande, comprenant au moins une sortie dudit filtre, suite à l'opération mise en oeuvre par ledit filtre ;
- une sérialisation bit à bit, en qualité de succession de toutes les sorties de la totalité dudit un ou desdits plusieurs filtres sélectionnés ;
lesdites listes et lesdites étiquettes étant stockées dans une base de données.

2. Procédé selon la revendication 1, comprenant en outre l'étape consistant à générer une équivalence de langage de programmation vers ledit filtre au format à base de modèles et à compiler ladite équivalence de langage de programmation à exécuter sur ladite unité de commande au moyen de bibliothèques fournies par le fabricant d'unités de commande.

3. Procédé selon l'une quelconque des revendications précédentes, comprenant en outre une étape préliminaire consistant à entrer lesdits filtres et lesdits messages de réseau CAN dans ladite base de données.

4. Procédé selon l'une quelconque des revendications précédentes, comprenant en outre une étape préliminaire consistant à entrer lesdits premiers messages de réseau CAN et lesdits filtres dans ladite base de données.

5. Procédé selon la revendication 4, dans lequel ladite étape d'entrée desdits premiers messages de réseau CAN est mise en oeuvre au moyen d'un analyseur de réseau CAN.

6. Procédé selon l'une quelconque des revendications précédentes, dans lequel est stockée une relation de type « 1 à 1 » ou une relation de type « 1 à plusieurs » entre un premier message de réseau CAN et un ou plusieurs filtres, de sorte que ladite seconde sélection peut être mise en oeuvre dans un sous-ensemble de ladite liste de filtres.

7. Procédé selon l'une quelconque des revendications précédentes, dans lequel au moins une information dans ledit second message de réseau CAN est ajoutée manuellement.

8. Procédé selon l'une quelconque des revendications précédentes, comprenant en outre une étape consistant à entrer, dans ladite base de données, une description technique pour chaque filtre, comprenant au moins un nom générique d'une entrée.

9. Procédé selon la revendication 8, dans lequel ledit nom générique d'une entrée est remplacé par l'étiquette d'une variable ou d'un paramètre inclus dans ledit premier message de réseau CAN, lorsque ladite variable est affectée à l'entrée de filtre à laquelle ledit nom générique renvoie.

10. Dispositif de programmation d'une procédure de haut niveau d'une unité de commande d'un véhicule comprenant un dispositif, l'unité de commande recevant et traitant des premiers messages de réseau CAN et générant et envoyant des seconds messages de réseau CAN, comprenant des moyens pour mettre en oeuvre le procédé selon l'une quelconque des revendications précédentes.

11. Dispositif selon la revendication 10, dans lequel lesdits moyens comprennent au moins une base de données, une interface graphique dotée de moyens d'entrée de données, de moyens de commande, de moyens de sélection permettant la sélection d'au moins un message de réseau CAN d'entrée, le filtrage dudit message de réseau CAN selon au moins une spécification fonctionnelle, la génération automatique d'une équivalence de modèles de blocs vers le second message de réseau CAN à envoyer, et la conversion automatique du modèle en langage de programmation.

12. Programme informatique comprenant des moyens de code de programme aptes à mettre en oeuvre les étapes selon l'une quelconque des revendications 1 à 9, lorsque ledit programme est exécuté sur un ordinateur.

13. Moyens lisibles par ordinateur comprenant un programme enregistré, lesdits moyens lisibles par ordinateur comprenant des moyens de code de programme aptes à mettre en oeuvre les étapes selon l'une quelconque des revendications de 1 à 9, lorsque ledit programme est exécuté sur un ordinateur.
